# EUROPEAN PATENT SPECIFICATION

(11) **EP 2 750 338 B1**
(45) Date of publication and mention of the grant of the patent: **04.10.2017**
(21) Application number: 13199238.0
(22) Date of filing: 20.12.2013
(51) Int. Cl.: H04L 12/58

(54) **Facility for message-based conversations**
Anlage für nachrichtenbasierte Konversationen
Installation de conversations à base de messages

(30) Priority: 28.12.2012 US 201261746653 P; 07.11.2013 US 201314073944
(43) Date of publication of application: 02.07.2014
(73) Proprietor: Sybase, Inc., Dublin, CA 94568 (US)
(72) Inventor: Lau, Allen, Oakland, CA California 94618 (US); Thendean, Gabriel, Pleasanton, CA California 94588 (US)
(74) Representative: Cole, Douglas Lloyd

(56) References cited:
- WO-A1-02/067602
- US-A1- 2008 248 788

## Description

### BACKGROUND

### Field of the Invention

Embodiments described herein relate generally to telecommunications services.

More particularly, embodiments relate to capabilities that enhance substantially the value and usefulness of various messaging paradigms including, inter alia, Short Message Service (SMS), Multimedia Message Service (MMS), Internet Protocol (IP) Multimedia Subsystem (IMS), Instant Messenger (IM), Electronic Mail (E-Mail), etc.

### Background of the Invention

As the 'wireless revolution' continues to march forward the importance to a Mobile Subscriber (MS) - for example a user of a Wireless Device (WD) such as a mobile/cellular/etc. telephone, a BlackBerry, a Palm Pilot, etc. that is serviced by possibly inter alia a Wireless Carrier (WC) - of their WD grows substantially.

For example, the wireless telecommunications industry trade group CTIA - The Wireless Association forecasts that in mid-2011 there were approximately 323m MSs in the U.S., up from approximately 220m MSs in the U.S. in mid-2006.

One consequence of such a growing importance is the resulting ubiquitous nature of WDs - i.e., MSs carry them at almost all times and use them for an ever-increasing range of activities.

Coincident with the expanding presence of WDs has been the explosive growth of messaging - a steady annual increase, year over year, in the number of (SMS, MMS, etc.) messages that have been exchanged by and between WDs. That steady increase shows no sign of abating. For example, as reported by the industry group CTIA (see ctia.org on the World Wide Web) in the U.S. there were over 2.1 trillion SMS messages sent during 2010 (up from - approximately 363 billion SMS messages sent during 2007, approximately 158 billion SMS messages sent during 2006, and approximately 81 billion SMS messages sent during 2005) and there were over 56.6 billion MMS messages sent during 2010 (up from - approximately 34.0 billion MMS messages sent during 2009 and approximately 2.7 billion MMS messages sent during 2006).

A text based messaging system is disclosed in WO 02/067602, in which finite state machines are used to control handling of message exchanges. Multimodal mobile media services using finite state machines are disclosed in US 2008/0248788.

Aspects of the invention are set out in the independent claims. Certain preferred features are set out in the dependent claims.

### BRIEF DESCRIPTION OF THE DRAWINGS

The accompanying drawings, which are incorporated herein and form part of the specification, depict example embodiments and, together with the summary that was presented above and the description that may be found below, further serve to illustrate inter alia the principles, structure, and operation of such embodiments. It will be readily apparent to one of ordinary skill in the relevant art that numerous variations, modifications, alternative forms, etc. of the depicted embodiments are easily possible.
Figure 1 is a diagrammatic presentation of an exemplary Messaging Inter-Carrier Vendor (MICV).
Figure 2 illustrates one particular arrangement consistent with embodiments described herein.
Figure 3 illustrates various of the exchanges or interactions that are possible during an optional registration portion of an example embodiment.
Figure 4 illustrates various of the exchanges or interactions consistent with embodiments described herein.
Figure 5 is a diagrammatic presentation of aspects of an exemplary Service Provider (SP) Application Server (AS).
Figure 6 depicts elements of an illustrative data model that an AS might employ to implement aspects of a Finite State Machine (FSM).
Figure 7 depicts an example computer system through which embodiments described herein.

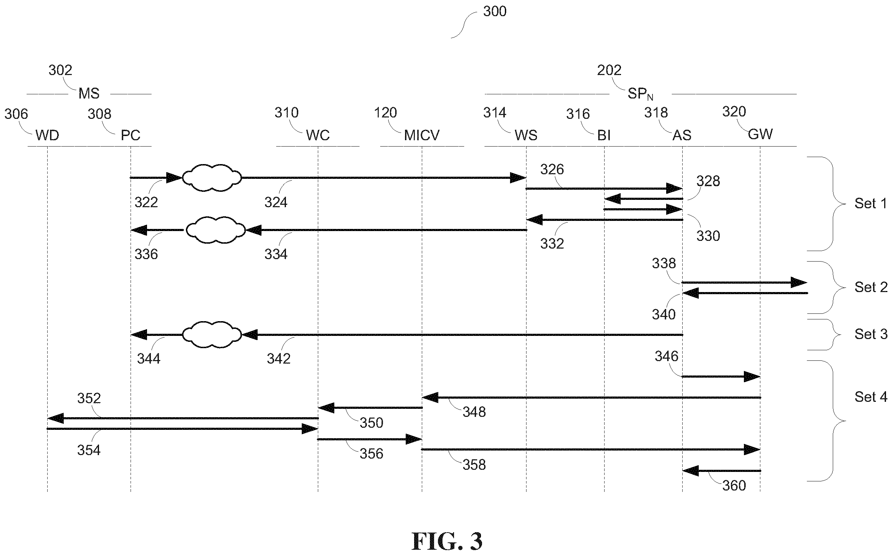

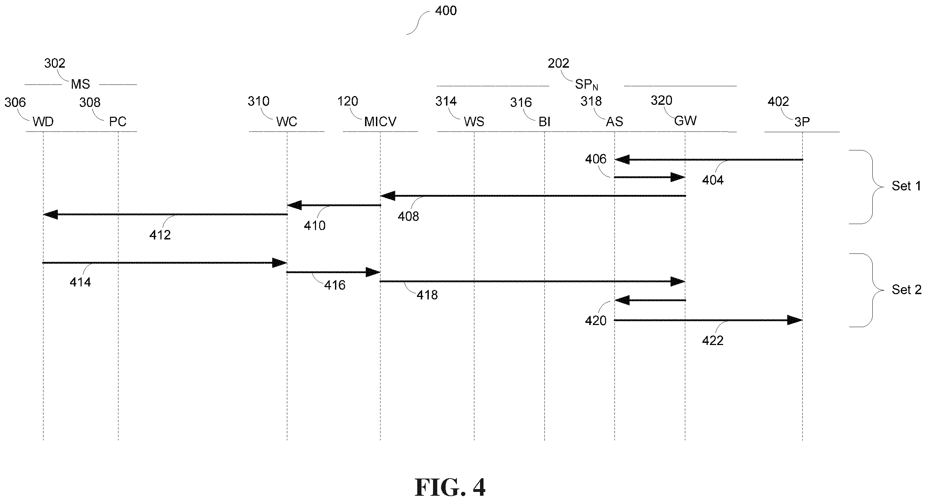

Throughout the drawings (a) like reference numbers generally indicate identical or functionally similar elements and (b) the left-most digit(s) of a reference number generally identify the drawing in which the reference number first appears. For example, in Figure 4 reference numeral 318 would direct the reader to Figure 3 for the first appearance of that element.

### DETAILED DESCRIPTION

MSs use their WDs to engage in and complete increasingly more complicated activities (beyond, for example, exchanging simple messages with their friends, receiving one-way news/weather/financial/etc. notifications, etc.). Many of those activities require a coordinated exchange of multiple SMS, MMS, etc. messages - i.e., a (SMS, MMS, etc.) message-based conversation with possibly inter alia the maintenance or preservation of state, context, etc. across (i.e., during) the message exchanges. As just one illustrative example:
1) Mary, a hypothetical MS, might receive on her WD a message from one of her financial institutions informing her that one of her accounts has become overdrawn and asking her if she wishes to transfer money to the overdrawn account.
2) Mary might reply with 'Yes.'
3) Mary might receive a message from the financial institution listing her other accounts, their available balances, and asking her from which account she wishes to transfer the funds.
4) Mary might reply with '2' (indicating the second of the listed accounts).
5) Mary might receive a message from the financial institution asking her how much money she wishes to transfer.
6) Mary might reply with '100' (indicating $100).
7) Mary might receive a confirmation message from the financial institution.

The specific example that was described above is illustrative only and it will be readily apparent to one of ordinary skill in the relevant art that numerous other examples are easily possible.

To enhance a message-based exchange or conversation like that outlined above, embodiments described herein are directed to the maintenance or preservation of state, context, etc. across (i.e., during) individual exchanges through techniques such as session identifiers, Uniform Resource Locator (URL) rewriting, cookies, etc.

In accordance with one embodiment, a method for maintaining the state of a message conversation across separate message exchanges to/from a wireless device, comprising receiving a message M1 from a wireless device in connection with a message conversation, ascertaining, from message M1, a key, based on the key, obtaining through a repository (a) the identity of a Finite State Machine (FSM) and (b) a plurality of attributes for the FSM including a current state of the FSM, based on the current state of the FSM, and the definition of the FSM, determining (a) a next state of the FSM and (b) an action corresponding to the next state of the FSM, performing the action corresponding to the next state of the FSM; and sending a message M2 to the wireless device, wherein message M2 is configured to further the message conversation.

In the instant embodiment determining (a) the next state of the FSM and (b) the action corresponding to the next state of the FSM may be based on at least one aspect of message M1. The at least one aspect of message M1 may comprise an indicia that distinguishes message M1 from another message in another message exchange to/from the wireless device. Other aspects and implementation details are provided below.

It should be noted that the embodiments that are described below are merely exemplary and may be embodied in various forms. Therefore the details that are disclosed below are not to be interpreted as limiting but merely as the basis for possibly inter alia teaching one of ordinary skill in the relevant art how to make and/or use the several disclosed embodiments.

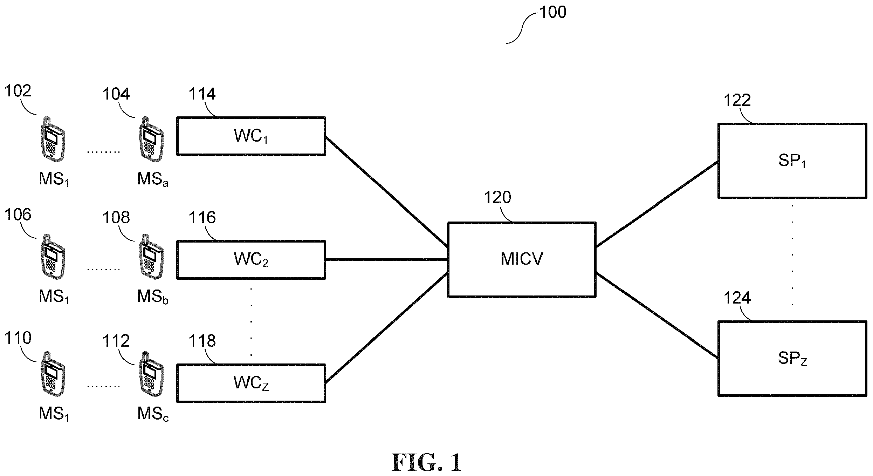

The present invention may leverage the capabilities of a centrally-located, full-featured MICV facility. As illustrated in Figure 1 and reference numeral 100 a MICV 120 is disposed between, possibly inter alia:
1) Multiple WCs (WC₁ 114, WC₂ 116 → WC_{Z} 118) on one side, and
2) Multiple SPs (SP₁ 122 → SP_{Z} 124), entities that may possibly inter alia provide a range of services/products/etc. to MSs, on the other side
and thus 'bridges' all of the connected entities. A MICV 120 thus, as one simple example, may offer various routing, formatting, delivery, value-add, etc. capabilities that provide, possibly inter alia:
1) A WC 114 → 118 (and, by extension, all of the MSs 102 → 104, 106 → 108, 110 → 112 that are serviced by the WC 114 → 118) with ubiquitous access to a broad universe of SPs 122 → 124, and
2) A SP 122 → 124 with ubiquitous access to a broad universe of WCs 114 → 118 (and, by extension, to all of the MSs 102 → 104, 106 → 108, 110 → 112 that are serviced by the WCs 114 → 118).

Generally speaking a MICV may have varying degrees of visibility (e.g., access, etc.) to the (MS ←→ MS, MS ←→ SP, etc.) messaging traffic:
1) A WC may elect to route just their out-of-network messaging traffic to a MICV. Under this approach the MICV would have visibility (e.g., access, etc.) to just the portion of the WC's messaging traffic that was directed to the MICV by the WC.
2) A WC may elect to route all of their messaging traffic to a MICV. The MICV may, possibly among other things, subsequently return to the WC that portion of the messaging traffic that belongs to (i.e., that is destined for a MS of) the WC. Under this approach the MICV would have visibility (e.g., access, etc.) to all of the WC's messaging traffic.

While the discussion below will include a MICV, it will be readily apparent to one of ordinary skill in the relevant art that other arrangements are equally applicable.

In the discussion below, embodiments will be described and illustrated as being offered by a SP (i.e., as noted above an entity that may possibly inter alia provide a range of services/products/etc. to MSs). A SP may, for example, be realized as an independent service bureau, an element of or within some organization (such as possibly inter alia a financial institution, a retail establishment, an on-line retailer, etc.), an element of a WC or a landline carrier, an element of a MICV, multiple entities (such as for example those just listed) or aspects of same working together, etc.

For purposes of exposition in the discussion below embodiments will be described and illustrated as being offered by a SP working together with a Third Party (3P). A 3P may, for example, be a financial institution, a retail establishment, an on-line retailer, a utility company, an employer, etc. It will be readily apparent to one of ordinary skill in the relevant art that numerous other arrangements (e.g., all of the activities that are described below being supported just by a SP, all of the activities that are described below being supported just by a 3P, various of the activities that are described below being supported by one or more SPs working together with one or more 3Ps, etc.) are equally applicable.

In the discussion below reference will be made to messages that are sent, for example, between a MS and a SP. As set forth below, a given 'message' sent between a MS and a SP may actually comprise a series of steps in which the message is received, forwarded, and routed between different entities, including possibly inter alia a MS, a WC, a MICV, and a SP. Thus, unless otherwise indicated, it will be understood that reference to a particular message generally includes that particular message as conveyed at any stage between an origination source, such as for example a MS, and an end receiver, such as for example a SP. As such, reference to a particular message generally includes a series of related communications between, for example, a MS and a WC; a WC and a MICV; a MICV and a SP; etc. The series of related communications may, in general, contain substantially the same information, or information may be added or subtracted in different communications that nevertheless may be generally referred to as a same message. To aid in clarity, a particular message, whether undergoing changes or not, is referred to by different reference numbers at different stages between a source and an endpoint of the message.

To better understand the particulars of the embodiments described herein consider for a moment a simple hypothetical example - SP SP_{N} offers a service.

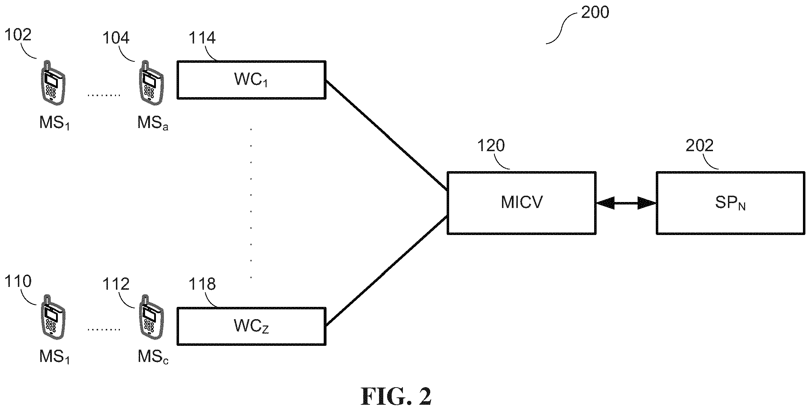

Figure 2 and reference numeral 200 depict one particular arrangement that may be possible under the instant hypothetical example. As indicated, all of the messaging traffic of numerous MSs (MS₁ 102 → MSₐ 104 and MS₁ 110 → MS_{c} 112, including Mary), serviced by various WCs (WC₁ 114 → WC_{Z} 118), is exchanged with a MICV 120 and the MICV 120 is connected with SP_{N} 202 (a SP that offers, possibly inter alia, enhanced message-based conversations).

Figure 3 and reference numeral 300 illustrate various of the exchanges or interactions that might occur under an optional registration portion of the instant hypothetical example. Such a registration process may be tailored (e.g., the range of information gathered, the scope of services subsequently offered, etc.) to the class of user - e.g., possibly inter alia different types, categories, etc. of users may complete different registration processes. Additionally, a registration process may be supported or offered by any combination of one or more entities (e.g., a 3P such as a financial institution, a retail establishment, an on-line retailer, an employer, a utility company, etc.; a SP; etc.). As well, some or all of the information that is collected during a registration process may be shared or exchanged between any combination of one or more entities (e.g., a SP, a 3P, etc.). Thus a MS may complete a (required or optional) registration process with any number of entities and aspects of the information that is collected during a given registration process may be shared or exchanged between any number of entities. The registration process that is depicted through Figure 3 is supported or offered by a SP (specifically by SP_{N} 202).

Of interest and note in Figure 3 are the following entities:
MS 302 WD 306. For example, a mobile telephone, BlackBerry, PalmPilot, etc. belonging to Mary 302.

MS 302 Personal Computer (PC) 308. For example, a home, work, etc. PC of Mary 302.

WC 310. The provider of service for a WD 306 of Mary 302.

MICV 120. As noted above the use of a MICV, although not required, provides significant advantages.

SP_{N} 202 Web Server (WS) 314. A publicly-available WWW site that is optionally provided by SP_{N} 202.

SP_{N} 202 Billing Interface (BI) 316. A single, consolidated interface that SP_{N} 202 may use to easily reach, possibly inter alia, one or more internal and/or external entities such as a credit card or debit card clearinghouse, a carrier billing system, a service bureau that provides access to multiple carrier billing systems, invoicing or billing facilities, etc.

SP_{N} 202 AS 318. Facilities that provide key elements of the instant invention (which will be described below).

SP_{N} 202 Gateway (GW) 320. A facility through which SP_{N} 202 may exchange possibly inter alia (SMS, MMS, etc.) messages with possibly inter alia a MICV 120.

It is important to note that while in Figure 3 the MS 302 WD 306 and MS 302 PC 308 entities are illustrated as being adjacent or otherwise near each other, in actual practice the entities may, for example, be physically located anywhere.

In Figure 3 the exchanges that are collected under the designation Set 1 represent the activities that might take place as Mary 302 completes a registration process with SP_{N} 202:
A) Mary 302 uses one of her PCs 308 to visit a WS 314 of SP_{N} 202 to, possibly among other things, complete a service registration process (see 322 → 324).
B) A WS 314 of SP_{N} 202 interacts with an AS 318 of SP_{N} 202 to, possibly among other things, commit some or all of the information that Mary 302 provided to one or more data repositories (e.g., a databases), optionally initiate a billing transaction, etc. (see 326).
C) As appropriate and as required a BI 316 completes a billing transaction (see 328 → 330).
D) After receiving a response from an AS 318 of SP_{N} 202 (332) a WS 314 of SP_{N} 202 responds appropriately (e.g., with the presentation of a confirmation message, etc.) (see 334 → 336).

The specific exchanges that were described above (as residing under the designation Set 1) are illustrative only and it will be readily apparent to one of ordinary skill in the relevant art that numerous other exchanges are easily possible. For example, the collected information may be reviewed, confirmed, etc. through one or more manual and/or automatic mechanisms. For example, the registration process may be completed through any combination of one or more channels including, inter alia, the WWW, wireless messaging (SMS, MMS, etc.), Electronic Mail (E-Mail) messages, Instant Messaging (IM), conventional mail, telephone, an Interactive Voice Response (IVR) facility, etc.

During the registration process described above a range of information may be captured from a MS including, possibly inter alia:
A) Identifying Information. For example, possibly among other things, name, address, age, landline and wireless Telephone Numbers (TNs), E-Mail addresses, IM names/identifiers, a unique identifier and a password, etc.
B) Account Information. For example, possibly among other things, various of the particulars for one or more of a MS' accounts (with organizations such as, possibly inter alia, WWW sites, utility companies, financial institutions, on-line retailers, etc.). The particulars may include, possibly inter alia, organization name and contact details, account number, account access credentials, etc.
C) Billing Information. For example, the particulars (such as, possibly inter alia, name, account/routing/etc. numbers, etc.) for financial institution (bank, brokerage, etc.) accounts, credit cards, debit cards, etc. As well, possibly the selection of one or more of the different service billing models may be offered by a SP (including, inter alia, a fixed one-time charge, a recurring [monthly, etc.] fixed charge, a recurring [monthly, etc.] variable charge, a per-transaction charge, etc.) and possibly the selection of one or more of the different payment mechanisms that may be offered by a SP (including, possibly among other things, credit or debit card information, authorization to place a charge on a MS's phone bill, authorization to deduct funds from a MS' [bank, brokerage, etc.] account, etc.).

The specific pieces of information that were described above are illustrative only and it will be readily apparent to one of ordinary skill in the relevant art that numerous other pieces of information (e.g., additional Identifying Information, scheduled daily/weekly/etc. reporting desired and/or on-demand reporting desired, etc.) are easily possible.

As noted above the information that Mary provided during the registration process may be preserved in a data repository (e.g., a database) and may optionally be organized as a MS Profile.

The content of Mary's profile may be augmented by SP_{N} 202 to include, as just a few examples of the many possibilities, internal and/or external demographic, psychographic, sociological, etc. data.

As noted above, a SP's BI may optionally complete a billing transaction. The billing transaction may take any number of forms and may involve different external entities (e.g., a WC's billing system, a carrier billing system service bureau, a credit or debit card clearinghouse, a financial institution, etc.). The billing transaction may include, inter alia:
1) The appearance of a line item charge on the bill or statement that a MS receives from her WC.
2) The charging of a credit card or the debiting of a debit card.
3) The (electronic, etc.) transfer of funds.
4) The generation of an invoice, statement, etc.

In Figure 3 the exchanges that are collected under the designation Set 2 represent the activities that might take place as SP_{N} 202 optionally coordinates, etc. with one or more external entities to, possibly among other things, secure access, exchange and/or confirm collected information, arrange to receive updates, etc. (see 338 → 340). During such exchanges SP_{N} 202 may employ any combination of one or more of possibly inter alia an Application Programming Interface (API), an interface layer, an abstraction layer, communication protocols, etc.

The specific exchanges that were described above (as residing under the designation Set 2) are illustrative only and it will be readily apparent to one of ordinary skill in the relevant art that numerous other exchanges (including, inter alia, updates to various of the information in a MS Profile in a SP's repository, etc.) are easily possible.

In Figure 3 the exchanges that are collected under the designation Set 3 represent the activities that might take place as an AS 318 of SP_{N} 202 dispatches to Mary 302 one or more confirmation E-Mail messages (see 342 → 344).

The specific exchanges that were described above (as residing under the designation Set 3) are illustrative only and it will be readily apparent to one of ordinary skill in the relevant art that numerous other exchanges (including, inter alia, the dispatch of multiple E-mail messages [i.e., multiple instances of the sequence 342 → 344], the reply by Mary 302 to a received E-mail message, etc.) are easily possible.

In Figure 3 the exchanges that are collected under the designation Set 4 represent the activities that might take place as an AS 318 of SP_{N} 202 dispatches one or more confirmation SMS, MMS, etc. messages to a WD 306 of Mary 302 (346 → 352) and Mary 302 optionally replies or responds to the message(s) (354 → 360). Of interest and note are:
1) In the instant example the messages are shown traversing a MICV 120.
2) SP_{N} 202 may employ a Short Code (SC) or a regular TN as its source address (and to which it would ask users of its service to direct any reply messages). While the abbreviated length of a SC (e.g., five digits for a SC administered by Neustar under the Common Short Code [CSC] program) incrementally enhances the experience of a MS 302 (e.g., Mary 302 need remember and enter only a few digits as the destination address of a reply message) it also, by definition, constrains the universe of available SCs thereby causing each individual SC to be a limited or scarce resource and raising a number of SC/CSC management, etc. issues

The specific exchanges that were described above (as residing under the designation Set 4) are illustrative only and it will be readily apparent to one of ordinary skill in the relevant art that numerous other exchanges are easily possible and indeed are fully within the scope of the present invention.

The Set 1, Set 2, Set 3, and Set 4 exchanges that were described above are illustrative only and it will be readily apparent to one of ordinary skill in the relevant art that numerous other exchanges are easily possible. For example, possibly inter alia, aspects of the registration information that was described above may subsequently be managed (e.g., existing information may be edited or removed, new information may be added, etc.) through any combination of one or more channels including, inter alia, a WWW facility, wireless messaging (SMS, MMS, etc.), E-Mail messages, IM exchanges, conventional mail, telephone, IVR facilities, etc.. Additionally, aspects of the registration information may be exchanged with one or more entities (such as possibly inter alia a 3P such as a financial institution, a retail establishment, an on-line retailer, an employer, a utility company, etc.; another SP; etc.).

To continue with the instant hypothetical example ... as Mary goes about her daily activities there may arise numerous instances where she would like to employ her WD to possibly inter alia:
1) Determine the balance of one of her (bank, brokerage, credit card, etc.) accounts.
2) Complete the payment portion of a purchase (from, for example, an on-line retailer, etc.).
3) Transfer money between various of her (bank, brokerage, credit card, etc.) accounts, transfer money from one of her (bank, brokerage, credit card, etc.) accounts to someone else, transfer money to someone else (perhaps another MS) with the amount of the transfer (along with, for example, charges, fees, etc.) appearing on her WC statement, etc.
4) Receive notification of an account overdraft situation and be able to address the situation (through for example the infusion of funds to the overdrawn account).
5) Receive notification of a pending credit card, etc. transaction and be able to possibly inter alia accept or reject the transaction.

The specific examples that were cataloged above are illustrative only and it will be readily apparent to one of ordinary skill in the relevant art that numerous other examples are easily possible.

Figure 4 and reference numeral 400 provide a framework within which examples, such as those cataloged above and others that would be readily apparent to one of ordinary skill in the relevant art, may be examined. The entities that are depicted in Figure 4 are the same as were depicted in, and described for, Figure 3 with one exception:

Third Party (3P) 402. An organization such as, possibly inter alia, a financial institution, a retail establishment, an on-line retailer, an employer, a utility company, a content provider, etc.

As noted previously, while the discussion below presents aspects of operations or methodologies being offered by a SP working together with a 3P it will be readily apparent to one of ordinary skill in the relevant art that numerous other arrangements (e.g., all of the activities that are described below being supported just by a SP, all of the activities that are described below being supported just by a 3P, various of the activities that are described below being supported by one or more SPs working together with one or more 3Ps, etc.) are equally possible.

In Figure 4 the exchanges that are collected under the designation Set 1 represent the activities that might take place as a 3P 402 initiates a (SMS, MMS, etc.) message-based conversation with Mary 302 by dispatching a request to an AS 318 of SP_{N} 202 (see 404). Such a request may employ among other things any combination of one or more of possibly inter alia an API, RPCs, an interface layer, an abstraction layer, communication protocols, Extensible Markup Language (XML) documents, etc. and may include among other things information about Mary 302 (such as for example an identifier, access credentials, the address [e.g., TN] of her WD 306, etc.), various particulars of the desired (SMS, MMS, etc.) message-based conversation, etc.

AS 318 may complete a range of internal processing activities (described in detail below) including possibly inter alia validating any supplied information, determining various of the particulars for the desired (SMS, MMS, etc.) message-based conversation, etc. During its processing activities AS 318 may among other things possibly leverage:
1) One or more repositories containing information about Mary 302 (e.g., as previously collected during a registration process, as previously received from one or more external entities [such as 3P 402], etc.).
2) A body of dynamically updateable configuration information or data (for among other things the different types of supported [SMS, MMS, etc.] message-based conversations, etc.).
3) Bodies of flexible, extensible, and dynamically configurable logic or rules (governing among other things the operation of a [SMS, MMS, etc.] message-based conversation, etc.).

SMS, MMS, etc. message requests may be directed to a GW 320 of SP_{N} 202 (see 406) where one or more (SMS, MMS, etc.) messages, containing possibly inter alia aspects of the (SMS, MMS, etc.) message-based conversation (e.g., perhaps a question or an alert followed by one or more reply options), may be dispatched to a WD 306 of Mary 302 (see 408 → 412).

The specific exchanges that were described above (as residing under the designation Set 1) are illustrative only and it will be readily apparent to one of ordinary skill in the relevant art that numerous other exchanges are easily possible. For example:
1) While the example that was presented above illustrated a system-initiated (SMS, MMS, etc.) message-based conversation (through the dispatch by a system of one or more Mobile Terminated [MT] messages to a WD) it is also possible to have a user-initiated (SMS, MMS, etc.) message-based conversation (through the dispatch by a user of a WD of one or more Mobile Originated [MO] messages to a system).
2) SP_{N} 202 may obtain the address (e.g., the TN) of the WD 306 of Mary 302 through any number of means including, for example, from 3P 402 (as described above), from one or more repositories within SP_{N} 202 (possibly leveraging registration information that was provided by Mary 302 and which was supplied to SP_{N} 202 either directly or indirectly), etc.
3) In any dispatched notification messages SP_{N} 202 may employ any number of addresses (including, possibly inter alia, a SC, a TN, etc.) to which it would ask users to direct any reply messages.
4) SP_{N} 202 may optionally alert 3P 402 (and/or one or more other entities) to the generation and the dispatch of one or more (SMS, MMS, etc.) messages.
5) Dispatched (SMS, MMS, etc.) messages may optionally contain, possibly inter alia, descriptive or explanatory text, confirmation information, contact information, a request to call (e.g., a help center) at a particular TN, etc.

In Figure 4 the exchanges that are collected under the designation Set 2 represent the activities that might take place as Mary 302 replies to a received SMS, MMS, etc. message (see 414 → 422).

The specific exchanges that were described above (as residing under the designation Set 2) are illustrative only and it will be readily apparent to one of ordinary skill in the relevant art that numerous other exchanges are easily possible. For example:
1) Based on any received replies from Mary 302 SP_{N} 202 may optionally complete one or more additional processing steps.
2) The sequence 404 → 412 and 414 → 422 may be repeated any number of times.

The Set 1 and Set 2 exchanges that were described above are illustrative only and it will be readily apparent to one of ordinary skill in the relevant art that numerous other exchanges are easily possible. For example:
1) A MS may optionally need to acknowledge a SMS, MMS, etc. message (by, for example, replying to same) within a defined period of time (after which an unacknowledged message may, possibly inter alia, go 'stale' and not be usable).
2) A particular (SMS, MMS, etc.) message-based conversation reply value may optionally be designated as being single-use, multi-use, etc.
3) A SP may incorporate additional factors, criteria, tests, etc. during various of its processing activities including possibly inter alia MS Location-Based Service (LBS) and/or Global Positioning System (GPS) information, biometric information, etc.
4) During its different activities an SP may complete any number of billing, reporting, etc. transactions.
5) An SP may track a MS' usage, aggregate same, optionally offer (to the MS, to external entities such as a 3P, etc.) discounts, rebates, surcharges, etc. based on the tracked usage, etc.
6) During its processing steps an AS may employ any combination of a number of automated (e.g., through software solutions) and/or manual (e.g., through human intervention) actions, techniques, capabilities, etc. and each of the techniques, strategies, capabilities, etc. that were described above may have associated with it, possibly inter alia, an optional set of weighting, scoring, confidence, etc. factors that may be used, either individually or together, to develop results.

The catalog of processing steps, activities, etc. that was described above is illustrative only and it will be readily apparent to one of ordinary skill in the relevant art that numerous other processing steps, activities, etc. are easily possible.

As described above, during a (SMS, MMS, etc.) message-based conversation a SP's AS may possibly inter alia maintain context or state across or during numerous (SMS, MMS, etc.) message exchanges. In this regard:
1) An AS may employ a key during a (SMS, MMS, etc.) message-based conversation. Such a key may for example be the TN of a MS' WD, be a dynamically generated value that an AS may associate with a MS' WD, etc. and may be explicitly or implicitly included in various of the SMS, MMS, etc. messages.
2) While an individual (SMS, MMS, etc.) message-based conversation may be synchronous (i.e., the conversation does not advance until a MS replies to a received SMS, MMS, etc. message) there may be multiple simultaneous conversations open or ongoing at any given time.
3) An AS may realize a (SMS, MMS, etc.) message-based conversation through a flexible, extensible, and dynamically configurable finite state machine (FSM). For example:
   A) A particular state of a FSM may define possibly inter alia a specific step of a (SMS, MMS, etc.) message-based conversation and may contain, possibly among other things, text for questions, alerts, etc.; available replies; etc.
   B) At any given state (or condition) of a FSM a particular input may result in among other things a transition to a new state with possibly inter alia a range of actions (e.g., updates to repositories; exchanges with external entities; one or more SMS, MMS, etc. messages; etc.).
   C) An input to a FSM may be acted upon in many different ways including inter alia keyword processing -- e.g., the extraction of one or more keyword values from the body of a message, the processing (e.g., editing, validation, lookup, alteration, replacement, etc.) of extracted values, acting upon processed values (such as for example the identification of a state transition), etc.
   D) Multiple inputs may be defined for any given state, with each input possibly leading to one or more different (new) states.
   E) A range of flexible, extensible, and dynamically configurable reply edit, validation, analysis, confirmation, etc. rules may be defined for, or attached to, any given state.
4) An AS may implement, realize, etc. aspects of a FSM using possibly inter alia one or more repositories. Such repositories may comprise any combination of conventional Relational Database Management Systems (RDBMSs) such as from Sybase or Oracle, Object Database Management Systems (ODBMSs), in-memory Database Management Systems (DBMSs), or any other equivalent facilities.

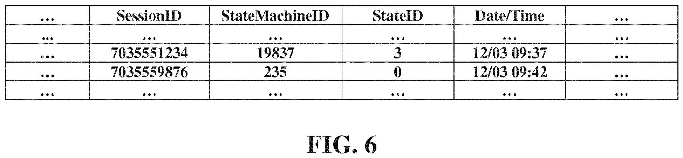

5) Figure 6 depicts elements of an illustrative data model that an AS might employ within one or more repositories to implement, realize, etc. aspects of a use of a FSM. The depicted data model comprises possibly inter alia a SessionID (e.g., a unique identifier such as the TN of a MS' WD), a StateMachineID (e.g., the identifier of a specific FSM that is active for the MS), a StateID (e.g., the current state of the active FSM), and a DateTime (e.g., the date and time of the last activity by the MS).
   It is to be understood that the depicted data model is illustrative only and it will be readily apparent to one of ordinary skill in the relevant art that numerous other data models (to for example capture the definition of a FSM), arrangements, etc. are easily possible.
6) An AS may possibly among other things 'sweep' through the contents of a repository (on a scheduled basis, on a random basis, on the basis of some particular activity or event, etc.) to inter alia update, expire, remove, etc. various of the entries in the repository.
7) The different aspects or elements of a FSM (such as for example states, the identification of starting and/or ending states, the transitions between states, triggers, etc.) may be created or defined, maintained, imported, exported, etc. through any combination of one or more channels including inter alia a (e.g., Web-based) user interface, an API, a data transfer or exchange facility, etc.
8) An AS may offer a simulator through which possibly among other things a FSM may be tested, evaluated, etc. using for example different inputs, different 'what if scenarios, etc. Such a simulator may offer inter alia a (e.g., Web-based) user interface.

To help illustrate the material that was just discussed consider the following hypothetical. Imagine that the TN of Mary's WD is 7035551212 and that three different (SMS, MMS, etc.) message-based conversations are open or underway. Under the first conversation a message (M1) to Mary (concerning an account overdraft situation) might identify three accounts - ACT11 #50000, ACT12 #50001, and ACT13 #50003 - from which Mary may transfer funds. Under the second conversation a message (M1') to Mary (concerning a bill payment) might identify two accounts - ACT21 #50001 and ACT22 #50003 - from which Mary may draw the necessary funds. Under the third conversation a message (M1") to Mary (concerning the authorization of a credit card transaction) might identify two possible replies - Y3 for Yes and N3 for No.

Mary might reply to the message that is connected with the second conversation with ACT22 and then reply to the message that is connected with the first conversation with ACT11 and then reply to the message that is connected with the third conversation with N3. While all three message exchanges may be keyed to 7035551212 (the TN of Mary's WD) the coding or the structure of the reply values (ACT22, ACT11, N3) allow the system to among other things associate a reply to its conversation (ACT22 ←→ the second conversation, ACT11 ←→ the first conversation, N3 ←→ the third conversation) and, for example, support asynchronous or out-of-sequence exchanges.

Any of the message exchanges that were described above may optionally include keywords or other values, indicators, etc. in the body of a message.

It is to be understood that the example that was described above is illustrative only and it will be readily apparent to one of ordinary skill in the relevant art that numerous other identification and tracking models, paradigms, etc. are easily possible.

The confirmation, response, etc. message(s) that were described above may optionally contain an informational element - e.g., a relevant or applicable factoid, etc. The informational element may be selected statically (e.g., all generated messages are injected with the same informational text), randomly (e.g., a generated message is injected with informational text that is randomly selected from a pool of available informational text), or location-based (i.e., a generated message is injected with informational text that is selected from a pool of available informational text based on the current physical location of the recipient of the message as derived from, as one example, a LBS, GPS, etc. facility).

The confirmation, response, etc. message(s) that were identified above may optionally contain advertising - e.g., textual material if an SMS model is being utilized, or multimedia (images of brand logos, sound, video snippets, etc.) material if an MMS model is being utilized. The advertising material may be selected statically (e.g., all generated messages are injected with the same advertising material), randomly (e.g., a generated message is injected with advertising material that is randomly selected from a pool of available material), or location-based (i.e., a generated message is injected with advertising material that is selected from a pool of available material based on the current physical location of the recipient of the message as derived from, as one example, a LBS, GPS, etc. facility).

The confirmation, response, etc. message(s) that were identified above may optionally contain promotional materials (e.g., still images, video clips, etc.).

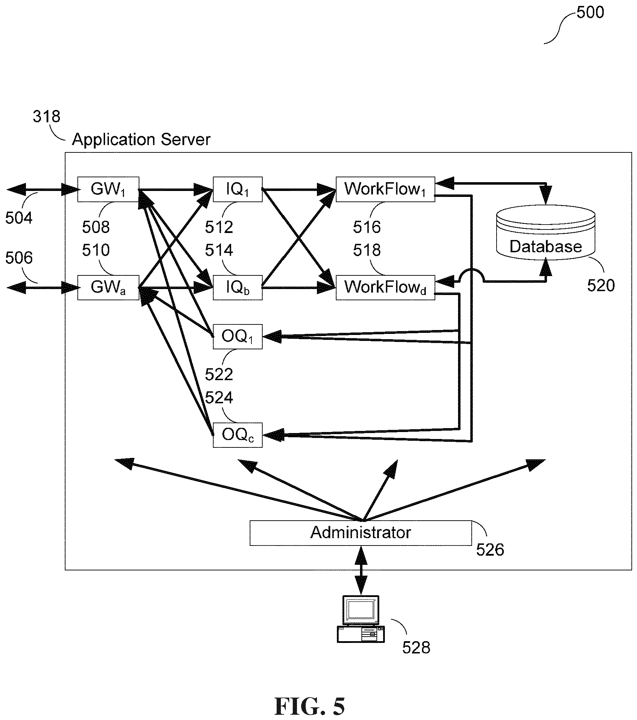

Figure 5 and reference numeral 500 provides a diagrammatic presentation of aspects of an exemplary SP AS 318. The illustrated AS 318 contains several key components - Gateways (GW₁ 508 → GWₐ 510 in the diagram), Incoming Queues (IQ₁ 512 → IQ_{b} 514 in the diagram), WorkFlows (WorkFlow₁ 516 → WorkFlow_{d} 518 in the diagram), Database 520, Outgoing Queues (OQ₁ 522 → OQ_{c} 524 in the diagram), and an Administrator 526. It will be readily apparent to one of ordinary skill in the relevant art that numerous other components are possible within an AS 318.

A dynamically updateable set of one or more Gateways (GW₁ 508 → GWₐ 510 in the diagram) handle incoming (SMS/MMS/etc. messaging, etc.) traffic 504 → 506 and outgoing (SMS/MMS/etc. messaging, etc.) traffic 504 → 506. A GW may support the receipt of incoming traffic 504 → 506 and the dispatch of outgoing traffic 504 → 506 via any combination of one or more of the available public and/or proprietary messaging paradigms including possibly inter alia Short Message Peer-to-Peer (SMPP), Computer Interface to Message Distribution (CIMD), External Machine Interface (EMI)/Universal Computer Protocol (UCP), Signaling System Seven (SS7) Mobile Application Part (MAP), MM4, MM7, etc.

Incoming traffic 504 → 506 is accepted and deposited on an intermediate or temporary Incoming Queue (IQ₁ 512 → IQ_{b} 514 in the diagram) for subsequent processing. Processed artifacts are removed from an intermediate or temporary Outgoing Queue (OQ₁ 522 → OQ_{c} 524 in the diagram) and then dispatched 504 → 506.

A dynamically updateable set of one or more Incoming Queues (IQ₁ 512 IQ_{b} 514 in the diagram) and a dynamically updateable set of one or more Outgoing Queues (OQ₁ 522 → OQ_{c} 524 in the diagram) operate as intermediate or temporary buffers for incoming 504 → 506 and outgoing traffic 504 → 506.

A dynamically updateable set of one or more WorkFlows (WorkFlow₁ 516 → WorkFlow_{d} 518 in the diagram) possibly inter alia remove incoming traffic 504 → 506 from an intermediate or temporary Incoming Queue (IQ₁ 512 → IQ_{b} 514 in the diagram), perform all of the required processing operations, and deposit processed artifacts on an intermediate or temporary Outgoing Queue (OQ₁ 522 → OQ_{c} 524 in the diagram). The WorkFlow component will be described more fully below.

The Database 520 that is depicted in Figure 5 is a logical representation of the possibly multiple physical repositories that may be implemented to support, inter alia, configuration, profile, monitoring, alerting, etc. information. The physical repositories may be implemented through any combination of conventional RDBMSs such as from Sybase or Oracle, through ODBMSs, through in-memory DBMSs, or through any other equivalent facilities.

An Administrator 526 that is depicted in Figure 5 provides management or administrative control over all of the different components of an AS 318 through, as one example, a WWW-based interface 528. It will be readily apparent to one of ordinary skill in the relevant art that numerous other interfaces (e.g., a data feed, an API, etc.) are easily possible.

Through flexible, extensible, and dynamically updatable configuration information a WorkFlow component may be quickly and easily realized to support any number of activities. For example, WorkFlows might be configured to support a registration process; to support interactions with external entities; to support various internal processing steps (as described above) including, possibly inter alia, (1) the evaluation of received request messages, (2) the generation, preservation, etc. of (SMS, MMS, etc.) message-based conversation particulars (e.g., question or alert text, available replies, keyword processing, FSM state identification, etc.) and (3) the generation and dispatch of response messages; to support the generation and dispatch of confirmation, etc. messages; to support various billing transactions; to support the generation of scheduled and/or on-demand reports; etc. The specific WorkFlows that were just described are exemplary only; it will be readily apparent to one of ordinary skill in the relevant art that numerous other WorkFlow arrangements, alternatives, etc. are easily possible.

A SP may maintain a repository (e.g., a database) into which selected details of all administrative, messaging, etc. activities may be recorded. Among other things, such a repository may be used to support:
1) Scheduled (e.g., daily, weekly, etc.) and/or on-demand reporting with report results delivered through SMS, MMS, etc. messages; through E-Mail; through a WWW-based facility; etc.
2) Scheduled and/or on-demand data mining initiatives (possibly leveraging or otherwise incorporating one or more external data sources) with the results of same presented through Geographic Information Systems (GISs), visualization, etc. facilities and delivered through SMS, MMS, etc. messages; through E-Mail; through a WWW-based facility; etc.

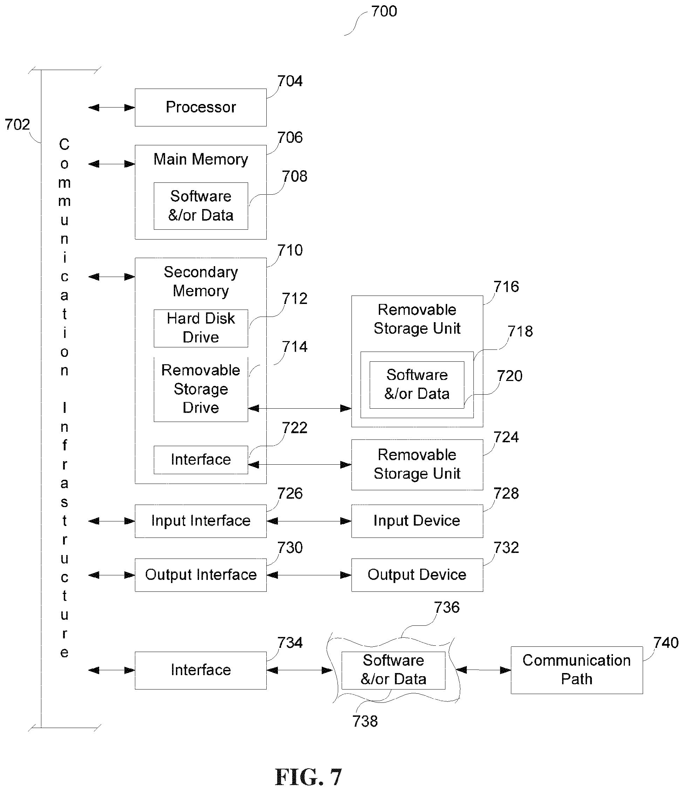

Various aspects of the embodiments described herein can be implemented by software, firmware, hardware, or any combination thereof. Figure 7 illustrates an example computer system 700 in which the present invention, or portions thereof, can be implemented using computer-readable code for example. Various embodiments of the invention are described in terms of this example computer system 700. After reading this description, it will become apparent to a person skilled in the relevant art how to implement the features of the described embodiments using other computer systems and/or computer architectures.

Computer system 700 includes one or more processors, such as processor 704. Processor 704 can be a special purpose processor or a general purpose processor. Processor 704 is connected to a communication infrastructure 702 (for example, a bus or a network).

Computer system 700 also includes a main memory 706, preferably Random Access Memory (RAM), containing possibly inter alia computer software and/or data 708.

Computer system 700 may also include a secondary memory 710. Secondary memory 710 may include, for example, a hard disk drive 712, a removable storage drive 714, a memory stick, etc. A removable storage drive 714 may comprise a floppy disk drive, a magnetic tape drive, an optical disk drive, a flash memory, or the like. A removable storage drive 714 reads from and/or writes to a removable storage unit 716 in a well known manner. A removable storage unit 716 may comprise a floppy disk, magnetic tape, optical disk, etc. which is read by and written to by removable storage drive 714. As will be appreciated by persons skilled in the relevant art(s) removable storage unit 716 includes a computer usable storage medium 718 having stored therein possibly inter alia computer software and/or data 720.

In alternative implementations, secondary memory 710 may include other similar means for allowing computer programs or other instructions to be loaded into computer system 700. Such means may include, for example, a removable storage unit 724 and an interface 722. Examples of such means may include a program cartridge and cartridge interface (such as that found in video game devices), a removable memory chip (such as an Erasable Programmable Read-Only Memory [EPROM], or Programmable Read-Only Memory [PROM]) and associated socket, and other removable storage units 724 and interfaces 722 which allow software and data to be transferred from the removable storage unit 724 to computer system 700.

Computer system 700 may also include an input interface 726 and a range of input devices 728 such as, possibly inter alia, a keyboard, a mouse, etc.

Computer system 700 may also include an output interface 730 and a range of output devices 732 such as, possibly inter alia, a display, one or more speakers, etc.

Computer system 700 may also include a communications interface 734. Communications interface 734 allows software and/or data 738 to be transferred between computer system 700 and external devices. Communications interface 734 may include a modem, a network interface (such as an Ethernet card), a communications port, a Personal Computer Memory Card International Association (PCMCIA) slot and card, or the like. Software and/or data 738 transferred via communications interface 734 are in the form of signals 736 which may be electronic, electromagnetic, optical, or other signals capable of being received by communications interface 734. These signals 736 are provided to communications interface 734 via a communications path 740. Communications path 740 carries signals and may be implemented using wire or cable, fiber optics, a phone line, a cellular phone link, a Radio Frequency (RF) link or other communications channels.

As used in this document, the terms "computer program medium," "computer usable medium," and "computer readable medium" generally refer to media such as removable storage unit 716, removable storage unit 724, and a hard disk installed in hard disk drive 712. Signals carried over communications path 740 can also embody the logic described herein. Computer program medium and computer usable medium can also refer to memories, such as main memory 706 and secondary memory 710, which can be memory semiconductors (e.g. Dynamic Random Access Memory [DRAM] elements, etc.). These computer program products are means for providing software to computer system 700.

Computer programs (also called computer control logic) are stored in main memory 706 and/or secondary memory 710. Computer programs may also be received via communications interface 734. Such computer programs, when executed, enable computer system 700 to implement the functionality (e.g., FSM) as discussed herein. In particular, the computer programs, when executed, enable processor 704 to implement the processes of the methodologies described herein. Accordingly, such computer programs represent controllers of the computer system 700. Where implemented using software, the software may be stored in a computer program product and loaded into computer system 700 using removable storage drive 714, interface 722, hard drive 712 or communications interface 734.

Embodiments are directed to computer program products comprising software stored on any computer useable medium. Such software, when executed in one or more data processing devices, causes data processing device(s) to operate as described herein. Embodiments may employ any computer useable or readable medium, known now or in the future. Examples of computer useable mediums include, but are not limited to, primary storage devices (e.g., any type of random access memory), secondary storage devices (e.g., hard drives, floppy disks, Compact Disc Read-Only Memory [CD-ROM] disks, Zip disks, tapes, magnetic storage devices, optical storage devices, Microelectromechanical Systems [MEMS], nanotechnological storage device, etc.), and communication mediums (e.g., wired and wireless communications networks, local area networks, wide area networks, intranets, etc.).

It is important to note that while aspects of the discussion that was presented above referenced the use of SCs and TNs it will be readily apparent to one of ordinary skill in the relevant art that other address identifiers (such as, for example, Session Initiation Protocol [SIP] Address, URL, etc.) are equally applicable.

The discussion that was just presented referenced two specific wireless messaging paradigms - SMS and MMS. Those paradigms potentially offer an incremental advantage over other paradigms in that native support for SMS and/or MMS is commonly found on a WD that a potential MS would be carrying. However, it is to be understood that it would be readily apparent to one of ordinary skill in the relevant art that numerous other paradigms (such as, for example, Internet Protocol [IP] Multimedia Subsystem [IMS], IM, E-Mail, Wireless Application Protocol [WAP], etc.) may be employed.

It is important to note that the hypothetical example that was presented above, which was described in the narrative and which was illustrated in the accompanying figures, is exemplary only. It is not intended to be exhaustive or to be limiting. It will be readily apparent to one of ordinary skill in the relevant art that numerous alternatives to the presented example are easily possible.

The following acronyms are employed in this disclosure:

| **Acronym** | **Meaning** |
|---|---|
| API | Application Programming Interface |
| AS | Application Server |
| | |
| BI | Billing Interface |
| | |
| CD-ROM | Compact Disc Read-Only Memory |
| CIMD | Computer Interface to Message Distribution |
| CSC | Common Short Code |
| | |
| DBMS | Database Management System |
| DRAM | Dynamic Random Access Memory |
| | |
| E-Mail | Electronic Mail |
| EMI | External Machine Interface |
| EPROM | Erasable Programmable Read-Only Memory |
| | |
| FSM | Finite State Machine |
| | |
| GIS | Geographic Information System |
| GPS | Global Positioning System |
| GW | Gateway |
| | |
| IM | Instant Messaging |
| IMS | IP Multimedia Subsystem |
| IP | Internet Protocol |
| IQ | Incoming Queue |
| IVR | Interactive Voice Response |
| | |
| LBS | Location-Based Service |
| | |
| MAP | Mobile Application Part |
| MEMS | Microelectromechanical Systems |
| MICV | Messaging Inter-Carrier Vendor |
| MMS | Multimedia Message Service |
| MO | Mobile Originated |
| MS | Mobile Subscriber |
| MT | Mobile Terminated |
| | |
| ODBMS | Object Database Management System |
| OQ | Outgoing Queue |
| | |
| PC | Personal Computer |
| PCMCIA | Personal Computer Memory Card International Association |
| PROM | Programmable Read-Only Memory |
| | |
| RAM | Random Access Memory |
| RDBMS | Relational Database Management System |
| RF | Radio Frequency |
| | |
| SC | Short Code |
| SFA | Second Factor Authentication |
| SIP | Session Initiation Protocol |
| SMPP | Short Message Peer-to-Peer |
| SMS | Short Message Service |
| SP | Service Provider |
| SS7 | Signaling System Seven |
| | |
| 3P | Third Party |
| TN | Telephone Number |
| | |
| UCP | Universal Computer Protocol |
| URL | Uniform Resource Locator |
| | |
| WAP | Wireless Application Protocol |
| WC | Wireless Carrier |
| WD | Wireless Device |
| WF | WorkFlow |
| WS | Web Server |
| WWW | World-Wide Web |
| | |
| XML | Extensible Markup Language |

## Claims

1. A method for maintaining the state of a message exchange across separate message exchanges to/from a wireless device, comprising:
storing in a repository information for a plurality of finite state machines, FSM, wherein finite state machines are associated with message exchanges;
maintaining, concurrently, a separate FSM for each one of a plurality of separate message exchanges involving the wireless device;
receiving a message M1 from a wireless device (306) in connection with a message exchange, wherein the message exchange is one of the plurality of message exchanges involving the wireless device;
ascertaining, from message M1, a key and a reply value, wherein the reply value distinguishes message M1 from another message in another one of the plurality of message exchanges involving the wireless device;
based on the key and the reply value, identifying the message exchange from the plurality of message exchanges and obtaining through the repository (a) the identity of a Finite State Machine, FSM, and (b) a plurality of attributes for the FSM including a current state of the FSM;
based on the current state of the FSM, and the definition of the FSM, determining (a) a next state of the FSM and (b) an action corresponding to the next state of the FSM;
performing the action corresponding to the next state of the FSM; and
sending a message M2 to the wireless device (306), wherein message M2 is configured to further the identified message exchange.

2. The method of claim 1, wherein determining (a) the next state of the FSM and (b) the action corresponding to the next state of the FSM is based on the reply value.

3. The method of any of the preceding claims, further comprising resetting a current state of the FSM when an expiration time is reached.

4. The method of any of the preceding claims, wherein receiving message M1 and sending message M2 comprises, sending and receiving one or more of a short message service (SMS) message, a multimedia message service (MMS) message, an internet protocol (IP) multimedia subsystem (IMS) message, an instant messenger (IM) message, or an electronic mail (e-mail) message.

5. The method of any of the preceding claims, wherein ascertaining the key comprises ascertaining a telephone number of the wireless device.

6. The method of any of the preceding claims, wherein the FSM information in the repository includes the key, a FSM identifier, a state identifier, and a date/time value.

7. The method of any of the preceding claims, wherein message M2 comprises at least one of a value or a question configured to elicit a reply from a user of the wireless device in the form of a subsequent message.

8. The method of any of the preceding claims, wherein message M2 contains one or more resources including an informational element or an advertisement.

9. The method of any of the preceding claims, further comprising executing a registration process with a user of the wireless device, wherein the registration process comprises:
capturing information from the user of the wireless device including at least one of identifying information, account information or billing information.

10. The method of any of the preceding claims, wherein the at least one of identifying information, account information or billing information is organized as a Mobile Subscriber Profile stored in a repository in memory.

11. An apparatus, comprising:
a memory (706, 710) storing a repository of information for a plurality of finite state machines, FSM, wherein finite state machines are associated with message exchanges, the apparatus arranged to maintain, concurrently, a separate FSM for each one of a plurality of separate message exchanges involving a wireless device;
a network interface (734) configured to receive a message M1 from the wireless device (306) in connection with a message exchange, wherein the message exchange is one of the plurality of message exchanges involving the wireless device; and
a processor (704) communicatively coupled to the memory and the network interface, wherein the processor is configured to:
ascertain, from message M1, a key and a reply value, wherein the message is received via the network interface, and wherein the reply value distinguishes message M1 from another message in another one of the plurality of message exchanges involving the wireless device;
based on the key and the reply value, identify the message exchange from the plurality of message exchanges and obtain through the repository in the memory (a) the identity of a Finite State Machine, FSM, and (b) a plurality of attributes for the FSM including a current state of the FSM;
based on the current state of the FSM, and the definition of the FSM, determine (a) a next state of the FSM and (b) an action corresponding to the next state of the FSM;
perform the action corresponding to the next state of the FSM; and
cause a message M2 to be sent, via the network interface (734), to the wireless device (306), wherein message M2 is configured to further the identified message exchange.

12. The apparatus of claim 11, wherein the processor is further configured to perform a method as set out in any of claims 2 to 10.

13. One or more non-transitory computer readable storage media encoded with software instructions that when executed are operable to perform a method as set out in any of claims 1 to 10.

## Patentansprüche

1. Verfahren zum Erhalten des Zustands eines Nachrichtenaustauschs über getrennte Nachrichtenaustausche zu/von einer drahtlosen Vorrichtung, das Folgendes aufweist:
Speichern von Informationen für mehrere endliche Automaten (FSM) in einem Repositorium, wobei endliche Automaten mit Nachrichtenaustauschen assoziiert sind;
gleichzeitiges Erhalten eines separaten FSM für jeden von mehreren separaten Nachrichtenaustauschen, an denen die drahtlose Vorrichtung beteiligt ist;
Empfangen einer Nachricht M1 von einer drahtlosen Vorrichtung (306) in Verbindung mit einem Nachrichtenaustausch, wobei der Nachrichtenaustausch einer der mehreren Nachrichtenaustausche ist, an denen die drahtlose Vorrichtung beteiligt ist;
Ermitteln eines Schlüssels und eines Antwortwerts anhand Nachricht M1, wobei der Antwortwert die Nachricht M1 von einer weiteren Nachricht in einem weiteren der mehreren Nachrichtenaustausche, an denen die drahtlose Vorrichtung beteiligt ist, unterscheidet;
auf Basis des Schlüssels und des Antwortwerts Identifizieren des Nachrichtenaustausches anhand der mehreren Nachrichtenaustausche und Beschaffen (a) der Identität eines finiten Automaten (FSM) und (b) von mehreren Attributen für den FSM einschließlich eines aktuellen Zustands des FSM durch das Repositorium;
auf Basis des aktuellen Zustands des FSM und der Definition des FSM Bestimmen (a) eines nächsten Zustands des FSM und (b) einer dem nächsten Zustand des FSM entsprechenden Aktion;
Durchführen der dem nächsten Zustand des FSM entsprechenden Aktion und
Senden einer Nachricht M2 an die drahtlose Vorrichtung (306), wobei die Nachricht M2 gestaltet ist, um den identifizierten Nachrichtenaustausch voranzubringen.

2. Verfahren nach Anspruch 1, wobei das Ermitteln (a) des nächsten Zustands des FSM und (b) der dem nächsten Zustand des FSM entsprechenden Aktion auf dem Antwortwert basiert.

3. Verfahren nach einem der vorhergehenden Ansprüche, das ferner das Zurücksetzen eines aktuellen Zustands des FSM, wenn eine Ablaufzeit erreicht wird, aufweist.

4. Verfahren nach einem der vorhergehenden Ansprüche, wobei das Empfangen von Nachricht M1 und das Senden von Nachricht M2 das Senden und Empfangen von einer oder mehr von einer Kurznachrichtendienst- (SMS) -Nachricht, einer Multimedia-Nachrichtendienst- (MMS) -Nachricht, einer Nachricht im Internetprotokoll (IP) Multimedia Subsystem (IMS), einer Nachrichtensofortversand- (IMS) -Nachricht oder einer elektronischen Post- (E-Mail) -nachricht aufweist.

5. Verfahren nach einem der vorhergehenden Ansprüche, wobei das Ermitteln des Schlüssels das Ermitteln einer Telefonnummer der drahtlosen Vorrichtung aufweist.

6. Verfahren nach einem der vorhergehenden Ansprüche, wobei die FSM-Informationen im Repositorium den Schlüssel, eine FSM-Kennung, eine Zustandskennung und einen Datums-/Zeitwert beinhalten.

7. Verfahren nach einem der vorhergehenden Ansprüche, wobei die Nachricht M2 wenigstens einen von einem Wert oder einer Frage, der bzw. die gestaltet ist, um eine Antwort von einem Benutzer der drahtlosen Vorrichtung in der Form einer nachfolgenden Nachricht hervorzurufen, aufweist.

8. Verfahren nach einem der vorhergehenden Ansprüche, wobei die Nachricht M2 eine oder mehr Ressourcen enthält, die ein Informationselement oder eine Werbung beinhalten.

9. Verfahren nach einem der vorhergehenden Ansprüche, das ferner das Ausführen eines Registrierungsprozesses mit einem Benutzer der drahtlosen Vorrichtung aufweist, wobei der Registrierungsprozess Folgendes aufweist:
Erfassen von Informationen von dem Benutzer der drahtlosen Vorrichtung, die wenigstens eine von Identifizierungsinformationen, Kontoinformationen oder Fakturierungsinformationen beinhalten.

10. Verfahren nach einem der vorhergehenden Ansprüche, wobei die wenigstens eine von Identifizierungsinformationen, Kontoinformationen oder Fakturierungsinformationen als ein Mobilfunk-Teilnehmerprofil organisiert ist, das in einem Repositorium im Speicher gespeichert wird.

11. Einrichtung, die Folgendes aufweist:
einen Speicher (706, 710), der ein Repositorium von Informationen für mehrere endliche Automaten (FSM) speichert, wobei endliche Automaten mit Nachrichtenaustauschen assoziiert sind, wobei die Einrichtung zum gleichzeitigen Erhalten eines separaten FSM für jeden von mehreren separaten Nachrichtenaustauschen, an denen eine drahtlose Vorrichtung beteiligt ist, angeordnet ist;
eine Netzschnittstelle (734), die zum Empfangen einer Nachricht M1 von der drahtlosen Vorrichtung (306) in Verbindung mit einem Nachrichtenaustausch konfiguriert ist, wobei der Nachrichtenaustausch einer der mehreren Nachrichtenaustausche ist, an denen die drahtlose Vorrichtung beteiligt ist; und
einen Prozessor (704), der kommunikativ mit dem Speicher und der Netzschnittstelle gekoppelt ist, wobei der Prozessor konfiguriert ist zum:
Ermitteln eines Schlüssels und eines Antwortwerts anhand Nachricht M1, wobei die Nachricht über die Netzschnittstelle empfangen wird und wobei der Antwortwert die Nachricht M1 von einer weiteren Nachricht in einem weiteren der mehreren Nachrichtenaustausche, an denen die drahtlose Vorrichtung beteiligt ist, unterscheidet;
auf Basis des Schlüssels und des Antwortwerts Identifizieren des Nachrichtenaustausches anhand der mehreren Nachrichtenaustausche und Beschaffen (a) der Identität eines finiten Automaten (FSM) und (b) von mehreren Attributen für den FSM einschließlich eines aktuellen Zustands des FSM durch das Repositorium im Speicher;
auf Basis des aktuellen Zustands des FSM und der Definition des FSM Bestimmen (a) eines nächsten Zustands des FSM und (b) einer dem nächsten Zustand des FSM entsprechenden Aktion;
Durchführen der dem nächsten Zustand des FSM entsprechenden Aktion und
Veranlassen des Sendens einer Nachricht M2 an die drahtlose Vorrichtung (306) über die Netzschnittstelle (734), wobei die Nachricht M2 gestaltet ist, um den identifizierten Nachrichtenaustausch voranzubringen.

12. Vorrichtung nach Anspruch 11, wobei der Prozessor ferner zum Durchführen eines Verfahrens nach einem der Ansprüche 2 bis 10 konfiguriert ist.

13. Ein oder mehr nichtflüchtige computerlesbare Speichermedien, in denen Softwareanweisungen codiert sind, die bei Ausführung zum Durchführen eines Verfahrens nach einem der Ansprüche 1 bis 10 funktionell sind.

## Revendications

1. Procédé de maintien de l'état d'un échange de message parmi des échanges de message distincts vers ou en provenance d'un dispositif sans fil, consistant à:
stocker dans un référentiel des informations concernant une pluralité de machines à états finis (FSM), les machines à états finis étant associées à des échanges de message ;
entretenir, simultanément, une FSM distincte pour chaque échange de message de la pluralité d'échanges de message impliquant le dispositif sans fil ;
recevoir un message M1 en provenance d'un dispositif sans fil (306) en connexion avec un échange de message, l'échange de message étant un échange de message de la pluralité d'échanges de message impliquant le dispositif sans fil ;
vérifier, à partir du message M1, une clé et une valeur de réponse, la valeur de réponse distinguant le message M1 d'un autre message dans un autre échange de message de la pluralité d'échanges de message impliquant le dispositif sans fil ;
sur la base de la clé et de la valeur de réponse, identifier l'échange de message parmi la pluralité d'échanges de message, et obtenir, par l'intermédiaire du référentiel, (a) l'identité d'une machine à états finis (FSM), et (b) une pluralité d'attributs de la FSM, notamment un état courant de la FSM ;
sur la base de l'état courant de la FSM et de la définition de la FSM, déterminer (a) un état suivant de la FSM et (b) une action correspondant à l'état suivant de la FSM ;
réaliser l'action correspondant à l'état suivant de la FSM ; et
envoyer un message M2 au dispositif sans fil (306), le message M2 étant configuré pour promouvoir l'échange de message identifié.

2. Procédé selon la revendication 1, dans lequel la détermination de (a) l'état suivant de la FSM et de (b) l'action correspondant à l'état suivant de la FSM est basée sur la valeur de réponse.

3. Procédé selon l'une quelconque des revendications précédentes, consistant en outre à réinitialiser un état courant de la FSM quand une heure d'expiration est atteinte.

4. Procédé selon l'une quelconque des revendications précédentes, dans lequel la réception du message M1 et l'envoi du message M2 consistent à envoyer et recevoir un ou plusieurs messages parmi un message de service de messages courts (SMS), un message de service de messages multimédias (MMS), un message de sous-système multimédia sur protocole Internet (IP) (IMS), un message de messagerie instantanée (IM) ou un message de courrier électronique (e-mail).

5. Procédé selon l'une quelconque des revendications précédentes, dans lequel la vérification de la clé consiste à vérifier un numéro de téléphone du dispositif sans fil.

6. Procédé selon l'une quelconque des revendications précédentes, dans lequel les informations de FSM dans le référentiel incluent la clé, un identifiant de FSM, un identifiant d'état et une valeur de date/heure.

7. Procédé selon l'une quelconque des revendications précédentes, dans lequel le message M2 comprend une valeur et/ou une question configurées pour induire une réponse d'un utilisateur du dispositif sans fil sous la forme d'un message ultérieur.

8. Procédé selon l'une quelconque des revendications précédentes, dans lequel le message M2 contient une ou plusieurs ressources comprenant un élément d'information ou une annonce.

9. Procédé selon l'une quelconque des revendications précédentes, consistant en outre à exécuter un processus d'inscription avec un utilisateur du dispositif sans fil, le processus d'inscription consistant à:
capturer des informations de l'utilisateur du dispositif sans fil comprenant au moins une information parmi une information d'identification, une information de compte et une information de facturation.

10. Procédé selon l'une quelconque des revendications précédentes, dans lequel l'au moins une information parmi une information d'identification, une information de compte et une information de facturation est organisée sous la forme d'un profil d'abonné mobile stocké dans un référentiel en mémoire.

11. Appareil, comprenant:
une mémoire (706, 710) stockant un référentiel d'informations pour une pluralité de machines à états finis (FSM), les machines à états finis étant associées à des échanges de message, l'appareil étant conçu pour entretenir, simultanément, une FSM distincte pour chaque échange de message de la pluralité d'échanges de message impliquant un dispositif sans fil ;
une interface réseau (734), conçue pour recevoir un message M1 en provenance du dispositif sans fil (306) en connexion avec un échange de message, l'échange de message étant un échange de message de la pluralité d'échanges de message impliquant le dispositif sans fil ; et
un processeur (704) couplé en communication à la mémoire et à l'interface réseau, le processeur étant conçu pour:
vérifier, à partir du message M1, une clé et une valeur de réponse, le message étant reçu par l'intermédiaire de l'interface réseau, et la valeur de réponse distinguant le message M1 d'un autre message dans un autre échange de message de la pluralité d'échanges de message impliquant le dispositif sans fil ;
sur la base de la clé et de la valeur de réponse, identifier l'échange de message parmi la pluralité d'échanges de message, et obtenir, par l'intermédiaire du référentiel dans la mémoire, (a) l'identité d'une machine à états finis (FSM), et (b) une pluralité d'attributs de la FSM, notamment un état courant de la FSM ;
sur la base de l'état courant de la FSM et de la définition de la FSM, déterminer (a) un état suivant de la FSM et (b) une action correspondant à l'état suivant de la FSM ;
réaliser l'action correspondant à l'état suivant de la FSM ; et
provoquer l'envoi d'un message M2, par l'intermédiaire de l'interface réseau (734), au dispositif sans fil (306), le message M2 étant configuré pour promouvoir l'échange de message identifié.

12. Appareil selon la revendication 11, dans lequel le processeur est en outre conçu pour réaliser un procédé selon l'une quelconque des revendications 2 à 10.

13. Un ou plusieurs supports de stockage non temporaires lisibles par ordinateur, codés avec des instructions logicielles qui, lorsqu'elles sont exécutées, permettent de réaliser un procédé selon l'une quelconque des revendications 1 à 10.
